Europäisches Patentamt

European Patent Office

Office européen des brevets

(11) Numéro de publication: **0 049 654**
**B1**

(12) **FASCICULE DE BREVET EUROPEEN**

(45) Date de publication du fascicule du brevet: **19.09.84**

(51) Int. Cl.³: **H 02 K 5/26, H 02 K 5/24**

(21) Numéro de dépôt: **81401469.2**

(22) Date de dépôt: **22.09.81**

(54) Moteur électrique à dispositif de fixation à bague élastique.

(30) Priorité: **03.10.80 FR 8021227**

(43) Date de publication de la demande:
**14.04.82 Bulletin 82/15**

(45) Mention de la délivrance du brevet:
**19.09.84 Bulletin 84/38**

(84) Etats contractants désignés:
**AT DE GB IT**

(56) Documents cités:
**US-A-2 047 838**
**US-A-2 074 136**
**US-A-2 750 137**
**US-A-3 012 743**
**US-A-3 235 653**
**US-A-3 721 411**
**US-A-3 855 489**

(73) Titulaire: **SOCIETE ELECTRO MECANIQUE DU NIVERNAIS SELNI**
**173, boulevard Haussmann**
**F-75008 Paris (FR)**

(72) Inventeur: **Lafarge, Guy**
**THOMSON-CSF SCPI 173, bld Haussmann**
**F-75360 Paris Cedex 08 (FR)**
Inventeur: **Pillot, Alain**
**THOMSON-CSF SCPI 173, bld Haussmann**
**F-75360 Paris Cedex 08 (FR)**

(74) Mandataire: **Grynwald, Albert et al**
**THOMSON-CSF SCPI 173, Bld Haussmann**
**F-75379 Paris Cedex 08 (FR)**

Courier Press, Leamington Spa, England.

## Description

L'invention est relative à un moteur électrique et à son dispositif de fixation, notamment à un appareil qu'il est destiné à équiper. Elle vise plus particulièrement un moteur à boîtier présentant des flasques d'extrémités dont chacun est prolongé vers l'extérieur par un nez central autour duquel est montée une bague élastique pour sa fixation, notamment sa suspension.

Le fonctionnement des moteurs électriques engendre des vibrations qui, si des précautions particulières ne sont pas prises, sont transmises aux appareils qu'ils équipent et rendent ceux-ci bruyants et réduisent leur durée de vie.

C'est pourquoi la fixation des moteurs est habituellement assurée par l'intermédiaire d'organes élastiques appelés "silentblocs" qui diminuent, dans une grande mesure, la transmission des vibrations du moteur vers l'appareil qu'il équipe.

Dans un moteur connu du type mentionné ci-dessus, pour empêcher que la bague élastique ne tourne par rapport au nez qu'elle entoure, ce dernier comporte, à sa périphérie, des irrégularités tels que des créneaux avec lesquels coopèrent des irrégularités correspondantes de la bague. Pour empêcher le déplacement axial de la bague par rapport au nez, ce dernier présente un épaulement coopérant avec une face transversale de la bague et une plaque d'arrêt est sertie à l'extrémité du nez et est appliquée contre une autre face transversale de la bague.

La partie interne du nez du flasque est en général destinée à recevoir un roulement à billes ou analogue dont la bague interne est montée sur l'arbre. La forme et les dimensions internes de ce nez doivent, de ce fait, être déterminées avec précision. La réalisation des irrégularités à la périphérie du nez est donc un usinage délicat car, s'il est mal exécuté, il peut entraîner une modification de cette forme et des ces dimensions. La fabrication de tels flasques est, ainsi, relativement coûteuse, ce qui est particulièrement gênant pour des appareils fabriqués en grandes séries.

On a également proposé (brevet US 3 721 411) d'immobiliser la bague élastique en translation et en rotation par rapport à un organe d'arrêt rigide, lui-même immobilisé en rotation et en translation par rapport au nez. Dans le moteur de ce brevet l'organe d'arrêt est immobilisé par rapport au nez du flasque grâce au contact bien ajusté (donc à frottement) d'un rebord cylindrique qu'il présente avec toute la périphérie du nez, plus précisément avec une surface cylindrique du nez dépourvue d'irrégularités. L'immobilisation obtenue avec un organe d'arrêt ainsi constitué n'est pas satisfaisante.

Le moteur selon l'invention comporte également un organe d'arrêt mais il est dépourvu des inconvénients mentionnés ci-dessus.

Ce moteur est caractérisé en ce que l'immobilisation en rotation de l'organe d'arrêt par rapport au nez du flasque est obtenue par coopération à frottement d'au moins une arête de l'organe d'arrêt avec ladite surface cylindrique du nez dépourvue d'irrégularités.

On a constaté que, de cette manière, l'immobilisation en rotation était particulièrement efficace malgré sa simplicité.

La surface externe du nez peut, comme sa surface interne, être de révolution et le flasque peut être fabriqué uniquement par emboutissage.

Dans une réalisation, la surface cylindrique du nez avec laquelle coopère l'arête de l'organe d'arrêt est une surface externe de ce nez.

De préférence l'arête de l'organe d'arrêt est parallèle à l'axe du moteur.

Dans une réalisation particulièrement simple l'organe d'arrêt présente plusieurs arêtes qui forment les extrémités de branches de profilés en U tournés vers l'axe du moteur, ces profilés en U constituant des dents coppérant avec des créneaux de la bague pour l'immobilisation en rotation de cette bague par rapport à l'organe d'arrêt.

Il est avantageux que l'organe d'arrêt soit en une tôle découpée et pliée.

D'autres caractéristiques de l'invention apparaîtront avec la description de certains de ses modes de réalisation, celle-ci étant effectuée en se référant aux dessins ci-annexés sur lesquels:

— la figure 1 est une vue schématique en coupe d'un moteur selon l'invention,
— la figure 2 est une vue en coupe axiale à plus grande échelle d'une partie du moteur représenté sur la figure 1,
— la figure 3 est une vue en coupe d'une bague élastique pour le moteur représenté sur la figure 1,
— la figure 4 est une vue suivant la flèche f de la figure 3,
— la figure 5 représente un autre élément du moteur représenté sur la figure 1, et
— la figure 6 est une coupe selon la ligne VI—VI de la figure 5.

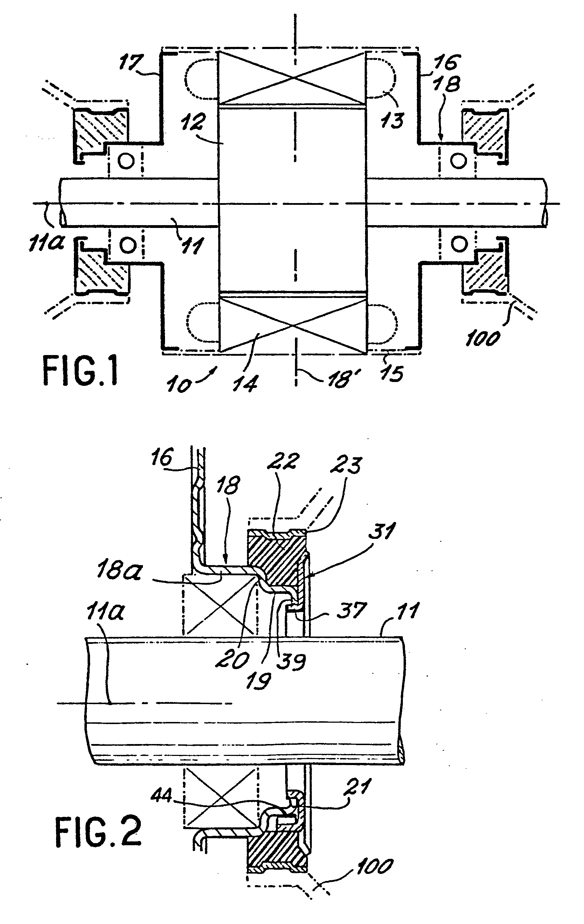

Dans l'exemple que l'on va décrire en relation avec les figures, le moteur 10 (figure 1) est destiné à entraîner le tambour d'une machine à laver le linge (non représentée). Il comporte, de façon en soi connue, un arbre 11 entraîné en rotation par un rotor 12, luimême entraîné en rotation par le champ tournant engendré par un courant électrique alternatif circulant dans des bobinages 13 du stator 14 du moteur. Ce stator est enfermé dans un manchon cylindrique 15 de même axe 11a que l'arbre 11 et qui est fermé à ses deux extrémités par des flasques 16 et 17.

Etant donné que la moteur présente un plan 18' de symétrie qui est perpendiculaire à l'axe

11a on ne décrira qu'une seule moitié de ce moteur, par exemple celle, se trouvant sur le côté droit de la figure 1, comportant le flasque 16.

Ce flasque 16 est prolongé, à l'extérieur du manchon 15, par un nez central 18 (figure 2) présentant une partie cylindrique 18a se raccordant à la couronne du flasque et séparée, par un épaulement 20, d'une autre partie cylindrique 19 de même axe 11a et de plus faible diamètre. Cette dernière se termine, à son extrémité libre, par un rebord 21 à ouverture circulaire centrée sur l'axe 11a.

La suspension du moteur au bâti 100 de la machine à laver ou à d'autres organes de cette machine est assurée par l'intermédiaire d'une bague élastique, ou silentbloc, 22 entourant l'extrémité du nez 18 et entourée elle-même par un anneau métallique 23 de fixation audit bâti.

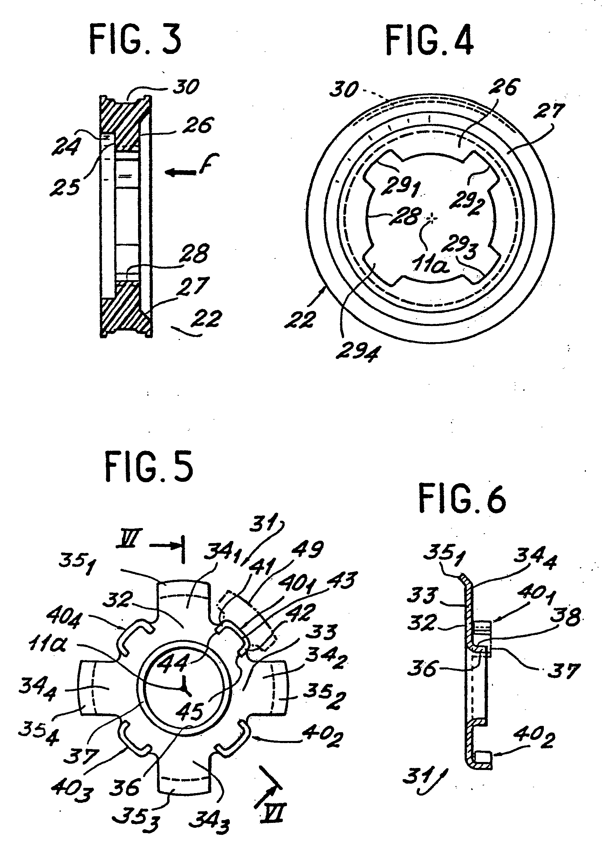

La bague 22 (figures 3 et 4) présente du côté tourné vers le flasque 16 un chambrage 24 dont le fond 25 est destiné à être appliqué contre l'épaulement 20 du nez 18 et dont le diamètre est égal au diamètre de la surface externe de la partie 18a dudit nez.

Sur son autre côté transversal la bague 22 présente un autre chambrage 26, de plus grand diamètre, qui est délimité par une partie tronconique 27 d'angle au sommet de 45° environ et évasée vers l'extérieur.

La surface interne 28 de cette bague est de section circulaire avec quatre créneaux découplés $29_1$, $29_2$, $29_3$ et $29_4$ régulièrement répartis autour de l'axe 11a.

La périphérie de la bague présente une gorge 30 destinée à recevoir l'anneau 23 de forme complémentaire.

Pour empêcher le déplacement de la bague 22 tant en translation qu'en rotation par rapport au nez 18, on prévoit un organe d'arrêt 31 (figures 2, 5 et 6) présentant une partie plane 32 destinée à être appliquée contre le fond du chambrage 26 de la bague 22 et formée d'une partie centrale 33 entourée par quatre saillies $34_1$, $34_2$, $34_3$ et $34_4$ en forme de dents régulièrement réparties autour de l'axe 11a. Chacune de ces dents se termine par un rebord incliné $35_1$ à $35_4$ destiné à être appliqué contre la périphérie tronconique 27 du chambrage 26 (figures 3 et 6).

La partie plane 32 de l'organe d'arrêt 31 présente une ouverture circulaire centrale 36 bordée, en direction du flasque 16, par un cour manchon cylindrique 37 de diamètre interne supérieur au diamètre de l'arbre 11. La surface externe 38 du manchon 37 est en contact à frottement avec l'arête interne 39 du rebord d'extrémité 21 de la partie 19 du nez 18. Ce contact à frottement contribue à la fixation, tant en translation qu'en rotation, de l'organe d'arrêt 31 par rapport au nez 18.

De la périphérie de la partie plane 33 de l'organe d'arrêt 31 sont en saillie, vers le flasque 16, des profilés en U $40_1$, $40_2$, $40_3$ et $40_4$ disposés de manière que leurs branches 41 et 42 soient tournées vers l'axe 11a avec une direction pratiquement radiale, le fond 43 de chacun de ces profilés étant ainsi la partie la plus éloignée de l'axe 11a.

Ces profilés 40 sont répartis régulièrement autour de l'axe 11a et sont disposés dans les intervalles angulaires entre les dents 34. Ils sont destinés à être logés dans les créneaux correspondants 29 de la bague 22 pour empêcher la rotation de cette bague par rapport audit organe et donc par rapport au nez 18.

Les arêtre d'extrémités 44 et 45 des branches 41 et 42 des profilés 40 se trouvent sur un cercle centré sur l'axe 11a et qui a le même rayon que la surface externe de la partie 19 du nez 18. De cette manière ces arêtes 44 et 45 sont en contact à frottement avec le nez 18 et contribuent, comme le manchon 38, à empêcher le déplacement en translation et en rotation de l'organe 31 par rapport au nez 18.

L'organe 31 est réalisé de façon simple par découpe et pliage d'un disque de tôle. On a représenté en traits mixtes sur la figure 5 la partie 49 de la tôle destinée à former, après pliage, le profilé en U $40_1$.

## Revendications

1. Moteur électrique présentant un boîtier fermé à ses extrémités transversales par des flasques (16, 17) de chacun desquels est en saillie un nez central (18) autour duquel est montée une bague élastique (22) entourée par un anneau (23) de fixation, cette bague étant immobilisée en translation et en rotation par rapport à un organe d'arrêt (31) rigide lui-même immobilisé en rotation et en translation par rapport au nez (18) grâce à la coopération à frottement d'une partie de cet organe d'arrêt avec une surface cylindrique du nez dépourvue d'irrégularités, caractérisé en ce que l'immobilisation en rotation de l'organe d'arrêt (31) par rapport au nez (18) est obtenue par coopération à frottement d'au moins une arête (44, 45) de l'organe d'arrêt avec ladite surface cylindrique du nez dépourvue d'irrégularités.

2. Moteur selon la revendication 1, caractérisé en ce que la surface cylindrique du nez avex laquelle coopère l'arête de l'organe d'arrêt est une surface externe de ce nez.

3. Moteur selon la revendication 1 ou 2, caractérisé en ce que l'arête (44, 45) de l'organe d'arêt est parallèle à l'axe du moteur.

4. Moteur selon l'une quelconque des revendications précédentes, caractérisé en ce que l'organe d'arrêt (31) présentant plusieurs arêtes qui forment les extrémités de branches (41, 42) de profilés en U tournées vers l'axe (11a) du moteur, ces profilés en U constituent des dents coopérant avec des créneaux de la bague pour l'immobilisation en rotation de la bague par rapport à l'organe d'arrêt.

5. Moteur selon l'une quelconque des revendications précédentes, caractérisé en ce que 'l'organe d'arrêt (31) présente un manchon (37) dont la surface externe coopère à frottement avec l'arête (39) d'un rebord (21) à l'extrémité du nez (18) pour immobiliser cet organe d'arrêt en translation par rapport au nez.

6. Moteur selon l'une quelconque des revendications précédentes, caractérisé en ce que l'organe d'arrêt est en une tôle découplée et pliée.

7. Moteur selon l'une quelconque des revendications précédentes, caractérisé en ce que le nez du flasque loge un roulement à billes.

**Patentansprüche**

1. Elektromotor, der ein Gehäuse aufweist, welches an seinen Querenden durch Lagerschilde (16, 17) verschlossen ist, an denen jeweils eine zentrale Ausstülpung (18) vorsteht, um die herum ein elastischer Ring (22) angebracht ist, welcher von einerm Befestigungsring (23) umgeben wird, wobei dieser Ring gegen Translations- und Drehbewegung in bezug auf ein starres Halteelement (31) gesichert ist, das seinerseits drehfest und translatorisch fest gegenüber der Ausstülpung (18) dadurch gehalten wird, daß ein Teil dieses Halteelementes mit einer zylindrischen und von Unregelmäßigkeiten freien Oberfläche der Ausstülpung unter Reibung zusammenwirkt, dadurch gekennzeichnet, daß die Verdrehsicherung des Halteelementes (31) in bezug auf die Ausstülpung (18) dadurch erhalten ist, daß wenigstens eine Kante (44, 45) des Halteelementes mit der genannten und von Unregelmäßigkeiten freien zylindrischen Oberfläche der Ausstülpung unter Reibung zusammenwirkt.

2. Motor nach Anspruch 1, dadurch gekennzeichnet, daß die zylindrische Oberfläche der Ausstülpung, mit der die Kante des Halteelementes zusammenwirkt, eine Außenoberfläche dieser Ausstülpung ist.

3. Motor nach Anspruch 1 oder 2, dadurch gekennzeichnet, daß die Kante (44, 45) des Halteelementes parallel zur Achse des Motors ist.

4. Motor nach einem der vorstehenden Ansprüche, dadurch gekennzeichnet, daß das Halteelement (31) mehrere Kanten aufweist, welche die Enden von Schenkeln (41, 42) von U-Profilteilen bilden, die gegen die Achse ($11_a$) des Motors gewandt sind, wobei diese U-Profilteile Zähne bilden, welche mit Auszackungen des Ringes zusammenwirken, um den Ring gegenüber dem Halteelement drehfest zu machen.

5. Motor nach einem der vorstehenden Ansprüche, dadurch gekennzeichnet, daß das Halteelement (31) eine Hülse (37) aufweist, deren Außenoberfläche unter Reibung mit der Kante (39) eines Randes (21) am Ende der Ausstülpung (18) zusammenwirkt, um dieses Halteelement translatorisch gegenüber der Ausstülpung festzuhalten

6. Motor nach einem der vorstehenden Ansprüche, dadurch gekennzeichnet, daß das Halteelement ein ausgestanztes und geprägtes Blechteil ist.

7. Motor nach einem der vorstehenden Ansprüche, dadurch gekennzeichnet, daß die Ausstülpung des Lagerschildes ein Kugellager aufnimmt.

**Claims**

1. Electric motor having a housing closed at its transverse ends by flanges (16, 17) each of which has a central projecting nose (18) whereabout a resilient ring (22) is mounted which is surrounded by an annular fixture member (23), said ring being fixed in translation and rotation with respect to a rigid stop member (31) which is itself fixed in rotation and translation with respect to the nose (18) by frictional cooperation of a portion of this stop member with a surface of the nose which is cylindrical and free of irregularities, characterized in that the stop member (31) is rotationally and translationally fixed with respect to the nose (18) by the frictional cooperation of at least one edge (44, 45) of the stop member with said cylindrical surface of the nose which is free of irregularities.

2. Motor according to claim 1, characterized in that the cylindrical surface of the nose with which the edge of the stop member cooperates is an outer surface of this nose.

3. Motor according to claim 1 or 2, characterised in that the edge (44, 45) of the stop member is parallel to the axis of the motor.

4. Motor according to any of the preceding claims, characterized in that the stop member (31) has a plurality of edges forming the ends of legs (41, 42) of U profiled members turned towards the axis ($11_a$) of the motor, these U profiled members forming teeth cooperating with serrations of the ring to fix the ring in rotation with respect to the stop member.

5. Motor according to any of the preceding claims, characterized in that the stop member (31) has a sleeve (37) the outer surface of which frictionally cooperates with the edge (39) of a rim (31) at the end of the nose (18) to fix this stop member in translation with respect to the nose.

6. Motor according to any of the preceding claims, characterized in that the stop member is formed of a punched and embossed sheet section.

7. Motor according to any of the preceding claims, characterized in that the nose of the flange houses a ball bearing.

FIG.1

FIG.2

# FIG. 3

# FIG. 4

# FIG. 5

# FIG. 6